# DEMANDE DE BREVET EUROPEEN

(11) **EP 1 029 772 A1**
(43) Date de publication de la demande: **23.08.2000**
(21) Numéro de dépôt: 00400204.4
(22) Date de dépôt: 27.01.2000
(51) Int. Cl.: B62D 6/00

(54) **Procédé et dispositif de commande du couple d'assistance appliqué au mécanisme de direction d'un véhicule automobile**

(30) Priorité: 19.02.1999 FR 9902105
(71) Demandeur: RENAULT, 92513 Boulogne Billancourt Cedex (FR)
(72) Inventeur: Bello, Jean-Luc, 27940 Aubevoye (FR); Coffin, Florent, 27600 Gaillon (FR)

(57) **Abrégé**

Le couple d'assistance est appliqué au mécanisme de direction (6) par un organe moteur (7) commandé par un couple de consigne (C_{cons}) délivré par un calculateur (8). Le couple de consigne est calculé à l'aide de plusieurs stratégies incluant une stratégie de rappel du volant en position neutre. Suivant l'invention, ladite stratégie de rappel est fonction du sens de marche dudit véhicule. En marche arrière, le couple de consigne croît avec l'angle de rotation (α) du volant (1) du véhicule et avec la vitesse du véhicule.

## Description

La présente invention est relative à un procédé de commande du couple d'assistance appliqué au mécanisme de direction d'un véhicule automobile par un organe moteur d'assistance et, plus particulièrement, à un tel procédé selon lequel on calcule un couple d'assistance de consigne et on commande ledit organe moteur en fonction dudit couple de consigne, ledit couple de consigne étant calculé à l'aide de plusieurs stratégies incluant une stratégie de rappel du volant en position neutre. La présente invention est également relative à un dispositif pour la mise en oeuvre de ce procédé.

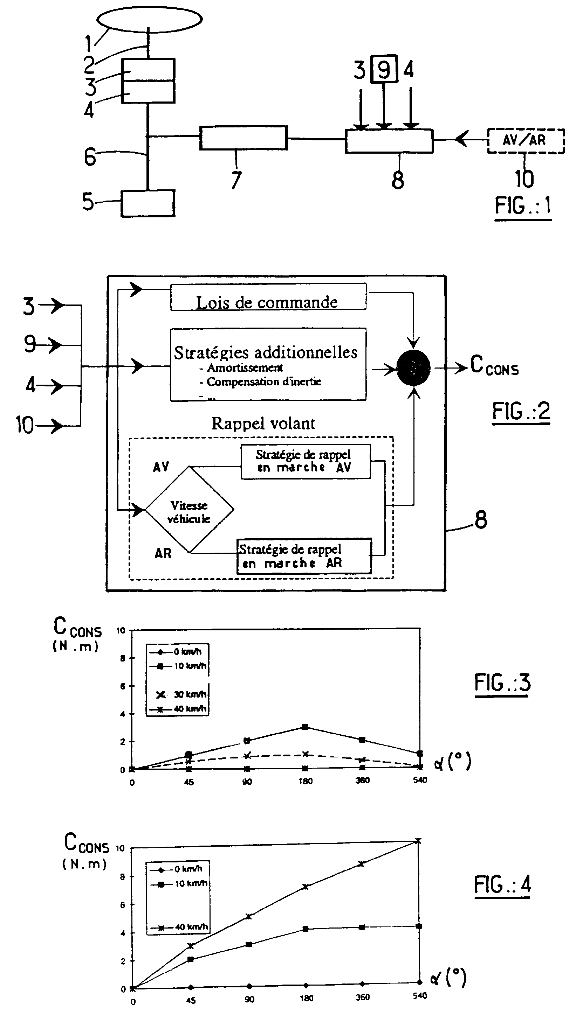

On connaît un tel procédé de commande du couple d'assistance, mis en oeuvre à l'aide du dispositif schématisé à la figure 1 du dessin annexé. Sur cette figure, on a représenté le volant 1 de direction d'un véhicule automobile monté sur un arbre 2 portant un couplemètre 3 et un capteur 4 d'angle de rotation du volant, cet arbre 2 étant couplé aux roues avant 5 d'un véhicule automobile par un mécanisme de direction 6. Un tel mécanisme de direction de véhicule automobile est couramment couplé à un organe moteur 7, un moteur électrique par exemple, susceptible de lui fournir un couple, dit couple d'assistance, permettant de réduire celui appliqué au volant 1 par le conducteur du véhicule, de manière à rendre la conduite de ce dernier moins pénible.

Un calculateur 8 commande le couple délivré par le moteur 7. Dans le cas d'un mécanisme de direction à colonne, pignon et crémaillère, le calculateur 8 calcule une valeur de consigne C_{cons} du couple d'assistance, régissant le couple délivré par le moteur 7. Pour ce faire, le calculateur 8 reçoit des signaux de divers capteurs implantés dans le véhicule, notamment des capteurs 3 et 4 précités et d'un capteur 9 de mesure de la vitesse d'un véhicule. Le capteur 4 délivre un signal représentatif d'un angle α de rotation du volant (ou angle "volant") mesuré à partir d'une position de référence pour laquelle α = 0 et qui correspond à la position du valant en l'absence de tout braquage des roues du véhicule.

Le couple appliqué par le conducteur au volant du véhicule est évidemment le paramètre le plus important figurant dans les lois de commande exécutées par le calculateur 8, dûment programmé à cet effet (voir l'organigramme des fonctions de calcul du couple de consigne C_{cons} exécutées par le calculateur 8, représenté à la figure 2).

Ces lois peuvent prendre également en compte la vitesse du véhicule, le couple de consigne délivré par le calculateur 8 variant alors en outre en fonction de cette vitesse, comme cela est bien connu.

Le calculateur 8 peut exécuter en outre des stratégies additionnelles pour tenir compte de situations ou de caractéristiques spécifiques. C'est ainsi que le roulement du véhicule sur une chaussée à surface irrégulière fait "remonter" dans le véhicule, et en particulier dans son mécanisme de direction, des chocs qu'il convient d'amortir pour le confort du conducteur et la sécurité du véhicule. De même, le mécanisme de direction, et en particulier le moteur d'assistance, présente une inertie qui doit être compensée.

En outre, le calculateur 8 exécute aussi couramment une stratégie de rappel du volant à sa position neutre, mise en oeuvre quand le véhicule progresse en ligne droite et donc à angle volant sensiblement nul. Dans nombre de situations de conduite, le conducteur doit maintenir le volant 1 de manière que le véhicule progresse en ligne droite. Le couple appliqué au volant par le conducteur du véhicule est alors très faible. L'attention du conducteur peut se relâcher et l'angle du volant s^{'}accroître sensiblement en l'absence de corrections manuelles, ce qui peut être dangereux.

Pour corriger cette situation, lorsque le couplemètre 3 envoie au calculateur 8 un signal représentatif de ce que le conducteur applique au volant 1 un couple sensiblement nul, la stratégie de rappel exécutée par le calculateur 8 consiste à commander le moteur 7 de manière que celui-ci applique au mécanisme de direction 6 un couple de rappel fonction de l'angle volant et de la vitesse du véhicule, propre à ramener le volant en position neutre quand celui-ci est lâché par le conducteur. Suivant une stratégie de rappel connue, pour un angle volant donné, le couple de rappel appliqué par le moteur 7 d'assistance diminue quand la vitesse du véhicule augmente, de manière que la vitesse de rotation du volant, pour rattraper la position neutre, reste sensiblement constante. Le confort de conduite du véhicule en est amélioré.

Les stratégies décrites ci-dessus, et notamment la stratégie de rappel, sont conçues, suivant la technique antérieure, pour être mises en oeuvre lorsque le véhicule circule en marche avant, et sensiblement en ligne droite.

Quand un véhicule circule en marche arrière, sa direction ne bénéficie plus d'un phénomène d'autocentrage observé en marche avant, dû au rappel gravitaire du véhicule, à la démultiplication du mécanisme de direction, etc..., que la stratégie de rappel décrite cidessus vise à suppléer et/ou à lisser.

Au contraire, en marche arrière, on observe qu'un véhicule automobile a tendance à accentuer le braquage des roues avant directrices et donc à écarter la position du volant repérée par l'angle "volant" α de la position neutre α = 0, phénomène connu sous le nom d'"enroulement de direction en marche arrière". Ce phénomène d'enroulement s'amplifie avec la vitesse du véhicule. En outre, actuellement, plus les roues du véhicule sont braquées, en marche arrière et à vitesse stabilisée, moins le conducteur doit appliquer de couple au volant pour accroître le braquage des roues. A vitesse assez élevée et en marche arrière, avec un angle volant de départ élevé, le véhicule peut alors devenir rapidement instable, et même se retourner dans des cas extrêmes.

La stratégie de rappel connue décrite ci-dessus pour un véhicule en marche avant n'est alors malheureusement pas applicable en marche arrière car, comme on la vu plus haut, l'évolution naturelle de l'angle volant dû au phénomène d'enroulement est de sens opposé à celle observés en marche avant du fait du phénomène d'autocentrage.

La présente invention a précisément pour but de fournir un procédé de commande du couple d'assistance appliqué au mécanisme de direction d'un véhicule automobile, qui soit efficace que le véhicule progresse en marche avant ou en marche arrière, et qui assure en particulier la sécurité du véhicule.

La présente invention a aussi pour but de fournir un dispositif pour la mise en oeuvre de ce procédé.

On atteint ces buts de l'invention, ainsi que d'autres qui apparaîtront à la lecture de la description qui va suivre, avec un procédé de commande du couple d'assistance appliqué au mécanisme de direction d'un véhicule automobile par un organe moteur d'assistance, selon lequel on calcule un couple d'assistance de consigne et on commande ledit organe moteur en fonction dudit couple de consigne, ledit couple de consigne étant calculé à l'aide de plusieurs stratégies incluant une stratégie de rappel du volant en position neutre, ce procédé étant remarquable en ce que ladite stratégie de rappel est fonction du sens de marche dudit véhicule.

Comme on le verra plus loin en détail, le procédé suivant l'invention permet ainsi de sélectionner une stratégie de rappel adaptée à l'un ou l'autre des comportements distincts que sont ceux de la direction du véhicule quand celui-ci circule, respectivement, en marche avant et en marche arrière.

Suivant d'autres caractéristiques du procédé suivant l'invention, selon ladite stratégie de rappel en marche arrière, le couple de consigne croit avec l'angle volant du véhicule et avec la vitesse du véhicule.

Four la mise en oeuvre de ce procédé, l'invention fournit un dispositif comprenant un couplemètre délivrant un signal représentatif du couple appliqué par le conducteur sur le volant de direction du véhicule, un capteur d'angle volant, un capteur de la vitesse du véhicule, un moyen de détection du sens de marche du véhicule, un organe moteur pour appliquer un couple d'assistance à un mécanisme de direction du véhicule et des moyens de calcul d'une consigne de couple pour commander le couple délivré audit mécanisme par ledit organe moteur, lesdits moyens de calcul étant programmés pour calculer ledit couple de consigne à l'aide de plusieurs stratégies, en fonction des informations délivrées par le couplemètre, le capteur d'angle volant, le capteur de vitesse du véhicule et le moyen de détection du sens de marche de ce véhicule, lesdites stratégies comportant une stratégie de rappel du volant en position neutre, fonction du sens de marche détecté.

D'autres caractéristiques et avantages de la présente invention apparaîtront à la lecture de la description qui va suivre et à l'examen du dessin annexé dans lequel:
- la figure 1 est un schéma d'un dispositif pour la mise en oeuvre du procédé suivant l'invention, déjà partiellement décrit en préambule de la présente description,
- la figure 2 est un organigramme des stratégies de commande développées par les moyens de calcul du dispositif de la figure 1, organigramme déjà partiellement décrit en préambule de la présente description, et
- les figures 3 et 4 sont des graphes illustrant les stratégies de rappel développées par le procédé suivant l'invention, en marche avant et en marche arrière du véhicule, respectivement.

On se réfère à la figure 1 du dessin annexé où il apparaît que le dispositif suivant l'invention se distingue de celui décrit en préambule de la présente description par l'addition d'un moyen de détection 10 propre à délivrer au calculateur 8 une information relative au sens de progression du véhicule équipé de ce dispositif, à savoir une progression en marche avant (AV) ou arrière (AR).

Ce moyen 10 peut être constitué par un détecteur spécialisé de tout type connu, ou bien par un accès à l'information "marche avant" ou "marche arrière", disponible sous forme numérique binaire sur le bus d'un réseau local de communication du type VAN ou CAN par exemple, installé dans le véhicule.

Le calculateur 8, disposant alors des informations tirées des signaux fournis par le couplemètre 3, le capteur d'angle volant 4, le capteur 9 de la vitesse du véhicule et par le moyen 10 délivrant l'information relative au sens de marche du véhicule, peut développer les stratégies de calcul de la consigne C_{cons} du couple d'assistance qui sont illustrées à la figure 2, ces stratégies ne se distinguant de celles décrites en préambule la présente description que par celles concernant le rappel du volant à la position neutre.

Selon la présente invention, cette stratégie de rappel est fonction du sens de marche du véhicule et comporte alors deux branches adaptées chacune à un véhicule en marche avant et à un véhicule en marche arrière, respectivement. Ces stratégies sont décrites cidessus en liaison avec les graphes des figures 3 et 4, ces graphes étant donnés à titre illustratif et non limitatif seulement. Chacun illustre l'évolution du couple C_{cons} de rappel de consigne (en ordonnée) calculé selon la présente invention, en fonction de l'angle volant α (en abscisse) et de la vitesse du véhicule, dans le cas d'un véhicule en marche avant (figure 3) et dans le cas d'un véhicule en marche arrière (figure 4).

La stratégie illustrée par le graphe de la figure 3 est classique. Elle est mise en oeuvre quand le couplemètre 3 indique que le conducteur n'exerce sensiblement aucun effort sur le volant 1 de direction. En marche avant, le couple d'assistance contribuant au rappel du volant en position neutre est relativement faible (de l'ordre de 0 à 3 N.m par exemple) et décroît avec la vitesse du véhicule, comme le montrent les différentes courbes représentées, correspondant à des vitesses de véhicule variant entre 0 et 40 km/h. On observe que ce couple est maximal aux environs d'un demitour volant (180°) et décroît régulièrement de part et d'autre de cette valeur d'angle volant.

Comme cela apparaît sur la figure 4, en marche arrière, la stratégie de rappel développée suivant la présente invention consiste à faire croître le couple avec l'angle volant, jusqu'à des valeurs assez élevées, de l'ordre de 10 N.m à 40 km/h par exemple, ce couple croissant par ailleurs avec la vitesse du véhicule, de manière tout à fait contraire à la stratégie développée lorsque le véhicule circule en marche avant. On notera cependant que la zone du graphe qui correspond à de très grandes valeurs d'angle volant α (autour de 540°) n'est, en principe, jamais atteinte.

Ainsi, grâce à la présente invention, en marche arrière, le couple d'assistance permet au volant de revenir d'une manière très naturelle à la position neutre quand le conducteur tient très peu son volant.

En outre, suivant la présente invention, la stratégie de rappel illustrée par le graphe de la figure 4 n'est pas conditionnée par l'absence de couple appliqué par le conducteur au volant, contrairement à la stratégie illustrée par la figure 3. Elle est mise en oeuvre également quand le conducteur exerce consciemment un effort sur le volant. Du fait du couple d'assistance croissant avec l'angle volant établi suivant la présente invention, le conducteur doit lui-même équilibrer ce couple par un couple contraire qui croit donc aussi, en valeur absolue, avec l'angle volant. Quand il braque les roues du véhicule, le conducteur éprouve ainsi avantageusement sur le volant les mêmes sensations, que le véhicule circule en marche avant ou en marche arrière.

## Revendications

1. Procédé de commande du couple d'assistance appliqué au mécanisme de direction (6) d'un véhicule automobile par un organe moteur (7) d'assistance, selon lequel on calcule un couple d'assistance de consigne (C_{cons})et on commande ledit organe moteur (7) en fonction dudit couple de consigne, ledit couple de consigne (C_{cons}) étant calculé à l'aide de plusieurs stratégies incluant une stratégie de rappel du volant (1) en position neutre, ce procédé étant caractérisé en ce que ladite stratégie de rappel est fonction du sens de marche dudit véhicule.

2. Procédé conforme à la revendication 1, caractérisé en ce que, selon ladite stratégie de rappel, en marche arrière, le couple de consigne (C_{cons}) croît avec l'angle (α) de rotation du volant (1) du véhicule.

3. Procédé conforme à la revendication 2, caractérisé en ce que le couple de consigne (C_{cons}) croît en outre avec la vitesse du véhicule.

4. Procédé conforme à l'une quelconque des revendications 1 à 3, caractérisé en ce que, selon ladite stratégie de rappel, en marche avant et à couple sensiblement nul appliqué au volant (1) du véhicule par le conducteur du véhicule, le couple de consigne (C_{cons}) décroît quand la vitesse du véhicule croît.

5. Procédé conforme à la revendication 4, caractérisé en ce que ledit couple (C_{cons}) est maximum pour un angle volant (α) de 180° environ.

6. Dispositif pour la mise en oeuvre du procédé conforme à l'une quelconque des revendications des revendication 1 à 5, caractérisé en ce qu'il comprend un couplemètre (3) délivrant un signal représentatif du couple appliqué par le conducteur sur le volant (1) de direction du véhicule, un capteur (4) de l'angle (α) du volant (1) par rapport à sa position neutre, un capteur (9) de la vitesse du véhicule, un moyen (10) de détection du sens de marche (AV ; AR) du véhicule, un organe moteur (7) pour appliquer un couple d'assistance à un mécanisme de direction (6) du véhicule, et des moyens de calcul (8) d'une consigne de couple (C_{cons}) pour commander le couple délivré audit mécanisme (6) par ledit organe moteur (7), lesdits moyens (8) étant programmés pour calculer ledit couple de consigne à l'aide de plusieurs stratégies, en fonction des informations délivrées par les moyens (3,4,9,10), lesdites stratégies comportant une stratégie de rappel du volant en position neutre fonction du sens de marche du véhicule (AV,AR) détecté par ledit moyen (10).
